# EUROPEAN PATENT SPECIFICATION

(11) **EP 3 262 231 B1**
(45) Date of publication and mention of the grant of the patent: **20.03.2019**
(21) Application number: 16706115.9
(22) Date of filing: 09.02.2016
(51) Int. Cl.: D06N 3/00, D06N 3/06

(54) **BONDING AGENTS FOR PLASTISOLS CONTAINING DOTP OR DINCH**
BINDEMITTEL FÜR PLASTISOLE MIT DOTP ODER DINCH
AGENTS DE LIAISON POUR PLASTISOLS CONTENANT DOTP OU DINCH

(30) Priority: 26.02.2015 US 201514632528
(43) Date of publication of application: 03.01.2018
(73) Proprietor: EASTMAN CHEMICAL COMPANY, Kingsport TN 37660 (US)
(72) Inventor: VAN ROSSUM, Ruud, 4354 SJ Vrouwenpolder (NL); HERMANS, Cornelis, Johannes, Gerardus, Maria, 4451NX Heinkenszand (NL); BOLTON, Daniel, Henry, Kingsport, TN 37664 (US)
(74) Representative: Ricker, Mathias
(86) International application number: PCT/US2016/017055
(87) International publication number: WO 2016/137738

(56) References cited:
- US-A- 3 210 439
- US-A- 3 505 105

## Description

### FIELD OF THE INVENTION

The invention generally relates to compositions for coating synthetic fabric with PVC.

### BACKGROUND OF THE INVENTION

There are many applications for polyvinyl chloride (PVC) coated fabrics. These include tarpaulins, conveyor belts, geomembranes, marquees, roofing and cladding materials, protective clothing, floor coverings, and many others. Historically, natural fabrics were used in these applications, but the natural fabrics have now been substituted, in many instances, with synthetic fibers. Compared to natural fibers, synthetic fibers have been found to offer improved strength, toughness, lightness, moisture resistance, resistance to microorganisms, and flexibility.

Synthetic fibers, however, generally have smooth monofilaments. PVC coatings tend to have poor mechanical adhesion to smooth surfaces. To improve adhesion, a specific bonding agent can be added to the PVC coating solution (often a plastisol) just prior to application. The bonding agent chemically bonds with the reactive groups of the fabric and allows the PVC coating to adhere to the fabric.

Most bonding agents incorporate isocyanates. A class of isocyanates is called isocyanurate.

It is common to incorporate into the bonding composition an ortho-phthalate carrier, for instance, dibutyl phthalate, dioctyl phthalate, or diisononyl phthalate (DINP). However, even though using ortho-phthalate carriers is common, such use is often undesirable due to public opinion on the adverse health effect of phthalates.

Recently, there has been a movement away from using ortho-phthalate plasticizers.

Alternatives to ortho-phthalate plasticizers include dioctyl terephthalate (DOTP) (also known as diethylhexyl terephthalate (DEHT)), 1,2-cyclohexane dicarboxylic acid diisononyl ester (DINCH), hydrogenated dioctyl phthalate (DHEH), hydrogenated DOTP (DOCH), citrates, Mesamoll® (alkylsulfonic acid ester with phenol), butyloctyl terephthalate (BOTP), and isononyl benzoate (INB).

However, commercially available bonding agents can show poor compatibility with ortho-phthalate free plastisols. Poor compatibility can result in a very short pot life due to rapidly increasing plastisol viscosity and gelation of the plastisol shortly after adding the bonding agent.

Thus, there is a need for a bonding agent that shows good compatibility with ortho-phthalate free PVC plastisols. There is also a need for a bonding agent that, in addition to showing good compatibility with ortho-phthalate free PVC plastisols, can improve the adherence of the PVC to fabric, especially synthetic fabric.

The present invention addresses these needs as well as others, which will become apparent from the following description and the appended claims.

### SUMMARY OF THE INVENTION

The invention is as set forth in the appended claims.

Briefly, in one first aspect reference is made to a bonding composition for adhering polyvinyl chloride to fabric. The composition comprises (a) isocyanurate and (b) organophosphate at an organophosphate to isocyanurate weight ratio of 4:1 to 10:1.

In another aspect, the present invention provides a coating composition. The coating composition comprises:
(a) a plastisol comprising polyvinyl chloride powder dispersed in a plasticizer comprising dioctyl terephthalate or 1,2-cyclohexane dicarboxylic acid diisononyl ester; and
(b) the bonding composition according to the first aspect.

In yet another aspect, the present invention provides a process for coating a fabric. The process comprises:
(a) combining the bonding composition according to the first aspect with a plastisol comprising polyvinyl chloride powder dispersed in a plasticizer comprising dioctyl terephthalate or 1,2-cyclohexane dicarboxylic acid diisononyl ester; and
(b) coating at least one side of a fabric with the mixture from step (a).

The present invention also provides for articles of manufacture comprising a fabric coated with the coating composition according to the invention.

### BRIEF DESCRIPTION OF THE DRAWINGS

Figure 1 is a bar graph of the peel strength of various PVC formulations based on DINP plasticizer from Example 3.
Figure 2 is a bar graph of the peel strength of various PVC formulations based on DOTP plasticizer from Example 4.

### DETAILED DESCRIPTION OF THE INVENTION

It has been found, surprisingly, that organophosphates can improve the compatibility of bonding agents containing isocyanurates with plastisols containing non-ortho-phthalate plasticizers.

Thus, in one first aspect, reference is made to a bonding composition for adhering polyvinyl chloride to fabric. The composition comprises:
(a) isocyanurate; and
(b) organophosphate,
   wherein the weight ratio of organophosphate to isocyanurate ranges from 4:1 to 10:1.

The isocyanurate preferably comprises aromatic diisocyanate groups, such as 2,4-diisocyanatotoluene, 2,6-diisocyanatotoluene, or mixtures thereof. In one embodiment, the isocyanurate comprises 2,4-toluene diisocyanate trimer (CAS # 26603-7).

Bonding agents containing isocyanurate are commercially available. Alternatively, the isocyanurate may be prepared by methods using catalysts known in the art. For example, isocyanurates can be produced by oligomerization, in particular trimerization, from diisocyanates. The diisocyanates normally used for this purpose include the isomeric diisocyanatotoluenes (TDI), composed mainly of 2,4-diisocyanatotoluene (2,4-TDI) and 2,6-diisocyanatotoluene (2,6-TDI). These can easily be converted almost completely to isocyanurates. The isocyanurate may also be produced exclusively from 2,4-TDI.

The isocyanurate may be prepared by treating the toluene diisocyanate, either alone or in a suitable solvent, with a basic catalyst such as an aliphatic tertiary amine, a basic metallic compound such as an alkali or alkaline earth metal oxide, hydroxide carbonate, alcoholate or phenate, an alkali metal salt of an enolizable compound or a metallic salt of a weak organic carboxylic acid. Co-catalysts may be used, such as, for example, mono-N-substituted carbamic esters in conjunction with basic metallic compounds. Catalysts containing metallic salts of weak organic carboxylic acids, optionally in the presence of a mono-N-substituted carbamic ester, can considerably reduce polymerization times.

Suitable solvents for preparing the isocyanurate include solvents that are inert towards isocyanates, and include, for example, esters such as ethyl acetate, butyl acetate, amyl acetate, diethyl phthalate, the acetate of the monoethyl ether of ethylene glycol, dimethyl phthalate, and butyl benzoate; ketones such as methyl isobutyl ketone; chloroform; benzene; toluene; xylene; sulfur dioxide; butyrolactone; monochlorobenzene; o-dichlorobenzene; ethers; or mixtures of such solvents.

The preparation of isocyanurate may conveniently be carried out by polymerizing the toluene diisocyanate with a suitable catalyst until the desired polymer has been obtained; further polymerization may then be prevented, for example, by mechanical removal of insoluble catalysts by filtration or by the inactivation of soluble catalysts by treatment with the calculated amount, or a slight excess thereof, of a strong acid, such as anhydrous hydrogen chloride or phosphoric acid. Alternatively, the toluene diisocyanate may be polymerized to a degree such that the required polymer formation has taken place and then after removal or inactivation of catalyst, residual free toluene diisocyanate may be removed by such processes as extraction, distillation, or precipitation of the polymer with a solvent in which the monomeric toluene diisocyanate is soluble.

In addition to diisocyanates, other polyisocyanates may be used to prepare the isocyanurate polymer, for example, p-phenylene diisocyanate, m-phenylene diisocyanate, 1-methoxyphenylene-2,4-diisocyanate, 3,3-dimethyl-4,4'-diisocyanatodiphenylmethane, diphenylene-4,4'-diisocyanate, 4,4'-diisocyanatodiphenyl ether, naphthylene-1,5-diisocyanate, hexamethylene diisocyanate, diisocyanatodicyclohexylmethane, p-xylylene diisocyanate, m-xylylene diisocyanate, isocyanatobenzyl isocyanates, 1,2,3,4,5,6-hexahydrodiphenylene-4,4'-diisocyanate, 4,4'-diisocyanato-1,2,3,4,5,6-hexahydrodiphenylmethane, 1,2,3,4-tetrahydronaphthylene-1,5-diisocyanate, toluene-2,4,6-triisocyanate, 3-methyl-4,6,4'-triisocyanato diphenylmethane, 2,4,4'-triisocyanatodiphenyl, 2,4,4'-triisocyanato-diphenyl ether, 4,4'-diisocyanatodiphenyl methane, 1-chlorophenylene-2,4-diisocyanate, and p-isocyanato benzyl isocyanate.

The amount of isocyanurate in the bonding composition may range from 0.5 to 30% by weight, based on the total weight of the bonding composition. Other amounts of the isocyanurate are possible, such as from 5 to 30% by weight, 8 to 30% by weight, 10 to 30% by weight, 0.5 to 25% by weight, 5 to 25% by weight, 8 to 25% by weight, 10 to 25% by weight, 0.5 to 20% by weight, 5 to 20% by weight, 8 to 20% by weight, 10 to 20% by weight, 0.5 to 15% by weight, 5 to 15% by weight, 8 to 15% by weight, or 10 to 15% by weight.

Any organophosphate that can improve the compatibility of isocyanurate with PVC plastisols containing non-ortho-phthalate plasticizers can be used in the bonding composition. Such organophosphates include those containing alkyl or aryl groups having 7 to 10 carbon atoms. Specific examples of suitable organophosphates include tri-ethylhexyl phosphate, tricresyl phosphate, isodecyl diphenyl phosphate, 2-ethylhexyl diphenyl phosphate, or mixtures thereof. In one embodiment, the organophosphate comprises tri-ethylhexyl phosphate.

The amount of organophosphate in the bonding composition may range from 50 to 99.5% by weight, based on the total weight of the bonding composition. Other amounts of the organophosphate are possible, such as from 75 to 99.5% by weight, 80 to 99.5% by weight, 85 to 99.5% by weight, 50 to 95% by weight, 75 to 95% by weight, 80 to 95% by weight, 85 to 95% by weight, 50 to 92% by weight, 75 to 92% by weight, 80 to 92% by weight, 85 to 92% by weight, 50 to 90% by weight, 75 to 90% by weight, 80 to 90% by weight, or 85 to 90% by weight.

The weight ratio of organophosphate to isocyanurate in the bonding composition ranges from 4:1 to 10:1. In one embodiment, the weight ratio of organophosphate to isocyanurate ranges from 4.5:1 to 10:1. In yet other embodiments, the weight ratio of organophosphate to isocyanurate ranges from 5:1 to 10:1, 6:1 to 10:1, 7:1 to 10:1, 4:1 to 9:1, 5:1 to 9:1, 6:1 to 9:1, or 7:1 to 9:1.

The bonding composition may also include typical amounts of traditional additives such as flame retardants, stabilizers, chlorinated hydrocarbons, secondary plasticizers, viscosity depressants, antioxidants, or mixtures thereof.

The components of the bonding composition may be combined in any known manner, including simultaneously or sequentially. Heating may facilitate dissolution of one or more of the components along with vigorous mixing.

The bonding composition is particularly suitable as adhesion promoters for plasticized PVC and in particular for PVC plastisols.

Thus, in another aspect, the invention provides a coating composition. The coating composition comprises:
(a) a plastisol comprising polyvinyl chloride (PVC) powder dispersed in a plasticizer comprising dioctyl terephthalate or 1,2-cyclohexane dicarboxylic acid diisononyl ester; and
(b) the bonding composition as described according to the first aspect.

The plastisol typically contains from 20 to 150 parts by weight of plasticizer per 100 parts of PVC powder. In one embodiment, the plastisol contains from 40 to 120 parts by weight of plasticizer per 100 parts of PVC powder.

In one embodiment, the plasticizer is dioctyl terephthalate.

In addition to PVC, the plastisol may include vinyl copolymers such as vinyl acetate or vinyl acrylate.

The amount of the bonding composition employed in the coating composition can vary, depending on the desired degree of adhesion and the isocyanurate content of the bonding composition. For example, for a bonding composition containing 25 wt% of isocyanurate, the coating composition typically contains from 1 to 8 wt% of the bonding composition. As another example, for a bonding composition containing 8 to 20 wt% of isocyanurate, the coating composition may contain from 1 to 20% by weight of the bonding composition. In one embodiment, the coating composition contains from 4 to 20% by weight of the bonding composition. In another embodiment, the coating composition contains from 4 to 15% by weight of the bonding composition. The amount by weight of the bonding composition is based on the total weight of the coating composition.

The coating composition according to the invention may further comprise a variety of additives, such as flame retardants (e.g., antimony trioxide or aluminum trihydroxide), stabilizers (including epoxy stabilizers), fillers (e.g., calcium carbonate or dolomite), pigments (e.g., titanium dioxide, carbon black, or ultramarine blue), chlorinated hydrocarbons, plasticizers, viscosity depressants (e.g., white spirit or tallates), antioxidants (e.g., 2,6-di-t-butyl-4-methylphenol, 3,5-bis(1,1-dimethylethyl)-4-hydroxybenzenepropanoic acid octadecyl ester, butylated hydroxytoluene, or octadecyl 3,5-di-t-butyl-4-hydroxyhydrocinnamate), UV absorbers (e.g., 2-hydroxyphenylbenzotriazole or 2-hydroxybenzophenones), biocides (e.g., 2-n-octyl-4-isothiazolin-3-one, 4,5,-dichloro-2-n-octyl-4- isothiazolin-3-one or 10,10'-oxybisphenoxarsine), or mixtures thereof.

The bonding agent is typically added to the plastisol, mixed at slightly elevated temperature (e.g., 20-30°C), and de-aerated shortly before use. The mixed composition is particularly suitable for coating fabric, particularly fabric made from synthetic fiber.

Thus, in another aspect, the invention provides a process for coating a fabric. The process comprises:
(a) combining the bonding composition as described according to the first aspect with a plastisol comprising polyvinyl chloride powder dispersed in a plasticizer comprising dioctyl terephthalate or 1,2-cyclohexane dicarboxylic acid diisononyl ester; and
(b) coating at least one side of a fabric with the mixture from step (a).

The fabric to be coated preferably comprises polyester or polyamide fibers. The fabric may be coated on one or both sides using techniques known in the art, such as by spreading, dipping, or calendering on conventional equipment.

In one embodiment, the coating process further comprises (c) exposing the coated fabric to elevated temperature to fuse the coating. The fusing step may be carried out, for example, at a temperature of 110 to 210°C for 30 to 90 seconds, until fusion is sufficiently completed.

Additional coats of the coating composition of the invention, or of another PVC composition may subsequently be applied and heated in a similar fashion.

The present invention also provides for articles of manufacture comprising a fabric coated with the coating composition according to the invention. Such articles of manufacture include tarpaulins, billboards, air-supported structures and other textile structures, flexible containers, polygonal roofs, geomembranes, pool-liners, awnings, protective apparel, conveyor belts, flock carpets, and foamed synthetic leather.

The present invention includes any and all combinations of embodiments, features, parameters, and/or ranges disclosed herein. That is, the invention may be defined by any combination of embodiments, features, parameters, and/or ranges described herein.

As used herein, the indefinite articles "a" and "an" mean one or more, unless the context clearly suggests otherwise. Similarly, the singular form of nouns includes their plural form, and vice versa, unless the context clearly suggests otherwise.

While attempts have been made to be precise, the numerical values and ranges described herein should be considered to be approximations (even when not qualified by the term "about"). These values and ranges may vary from their stated numbers depending upon the desired properties sought to be obtained by the present invention as well as the variations resulting from the standard deviation found in the measuring techniques. Moreover, the ranges described herein are intended and specifically contemplated to include all sub-ranges and values within the stated ranges. For example, a range of 50 to 100 is intended to describe and include all values within the range including sub-ranges such as 60 to 90 and 70 to 80.

The content of all documents cited herein, including patents as well as non-patent literature, is hereby incorporated by reference in their entirety. To the extent that any incorporated subject matter contradicts with any disclosure herein, the disclosure herein shall take precedence over the incorporated content.

This invention can be further illustrated by the following examples of preferred embodiments thereof, although it will be understood that these examples are included merely for purposes of illustration and are not intended to limit the scope of the invention.

### EXAMPLES

Table 1 shows the commercial bonding agents that were tested in the examples below, where DINP is diisononyl phthalate, INB is isononyl benzoate, and TEHP is triethylhexyl phosphate.

**Table 1**

| **Bonding Agent** | **Supplier** | **Isocyanate Content (wt%)** | **Carrier** |
|---|---|---|---|
| Vulcabond MDX | Akcros Chemicals | 25 | DINP |
| Nourybond 289 | Air Products | 25 | DINP |
| Nourybond 290 | Air Products | 30 | DINP |
| TL LXS 51099 | Lanxess | 25 | INB |
| Permuthane XR 13 553 | Stahl Waalwijk | 25 | DINP |
| Vulcanbond TP | Akcros Chemicals | 25 | TEHP |
| Vulcanbond TP30 | Akcros Chemicals | 30 | TEHP |
| Permuthane XR 22-556 | Stahl Waalwijk | 30 | DINP |

Table 2 shows the plasticizers that were tested.

**Table 2**

| **Plasticizer Name** | **Abbreviation** |
|---|---|
| diisononyl phthalate | DINP |
| dioctyl terephthalate | DOTP |
| trimethyl pentanyl diisobutyrate | TXIB |
| di-butyl terephthalate | DBT |
| Benzoflex 9-88 | B 9-88 |
| Benzoflex 1046 | B 1046 |
| Triacetin | Triacetin |
| 1,2-cyclohexane dicarboxylic acid diisononyl ester | DINCH |
| bis(2-propylheptyl) phthalate | DPHP |

### Example 1

To quickly determine the compatibility of the plasticizers with the commercial bonding agents and to detect visual changes, the commercial bonding agents were mixed directly with the plasticizers, instead of using PVC plastisols.

The mixtures were prepared by adding the plasticizer to the bonding agent in a vial at a 5:1 weight ratio of plasticizer to bonding agent, shaking the vial firmly by hand, and then observing the mixture after 24 hours.

The appearance of the mixtures was rated for cloudiness, gelation, color change, and viscosity according to scale set forth in Table 3.

**Table 3**

| **Rating** | **Appearance** |
|---|---|
| 5 | Clear, colorless, easily pourable |
| 4 | Clear, slightly colored, easily pourable |
| 3 | Turbid, white, easily pourable |
| 2 | Some residue, easily pourable |
| 1 | Turbid, colored, gelled |

The appearance rating of the mixtures is reported in Table 4.

**Table 4**

| **Bonding Agent** | **Plasticizer** | | | | | | | | |
|---|---|---|---|---|---|---|---|---|---|
| | **DINP** | **DOTP** | **TXIB** | **DBT** | **B 9-88** | **B 1046** | **Triacetin** | **DINCH** | **DPHP** |
| Vulcabond MDX | 5 | 1 | n/t | n/t | n/t | n/t | n/t | 1 | 5 |
| Nourybond 289 | 5 | 2 | n/t | 5 | n/t | 5 | 5 | 5 | n/t |
| Nourybond 290 | 2 | 2 | n/t | n/t | n/t | 4 | 2 | 2 | n/t |
| TL LXS 51099 | 5 | 1 | 1 | 1 | 1 | 1 | 1 | 3 | n/t |
| Permuthane XR 13 553 | 5 | 2 | 1 | 1 | 1 | n/t | n/t | 4 | 5 |
| Vulcanbond TP | 5 | 3 | 5 | n/t | n/t | n/t | 5 | 5 | 5 |
| Vulcanbond TP30 | 5 | 1 | 5 | 5 | n/t | n/t | n/t | n/t | 5 |
| Permuthane XR 22-556 | 5 | 1 | 1 | 5 | 5 | 5 | 5 | 5 | 5 |

| | | | | | | | | | |
|---|---|---|---|---|---|---|---|---|---|
| n/t = not tested | | | | | | | | | |

As seen from Table 4, the results show that DINP and DPHP, both ortho-phthalates, are more compatible with most of the tested bonding agents than the other plasticizers tested. DOTP, in particular, showed low compatibility with most of the tested bonding agents.

### Example 2

The procedure of Example 1 was repeated with mixtures containing 2 parts by weight of bonding agent, 6 parts by weight of DOTP as the plasticizer, and 1 part by weight of triethylhexyl phosphate (TEHP) as a compatibilizer.

The appearance of the mixtures was rated using the scale in Table 3 immediately after mixing as well as after 3 days. The results are reported in Table 5.

**Table 5**

| **Bonding Agent** | **Compatibilizer** | **Plasticizer** | |
|---|---|---|---|
| | | **DOTP** | **DOTP** |
| | | **Initial** | **3 Days** |
| Vulcabond MDX | TEHP | 5 | 2 |
| Nourvbond 289 | TEHP | 5 | 5 |
| Nourvbond 290 | TEHP | 1 | 1 |
| TL LXS 51099 | TEHP | 3 | 3 |
| Permuthane XR 13 553 | TEHP | 5 | 4 |
| Vulcanbond TP | TEHP | 5 | 5 |
| Vulcanbond TP30 | TEHP | 5 | 5 |
| Permuthane XR 22-556 | TEHP | 5 | 4 |

As seen from Table 5, adding TEHP significantly improved the compatibility of DOTP with the bonding agents.

### Example 3

A plastisol was prepared by mixing the ingredients shown in Table 6 at the listed proportions.

**Table 6**

| **Plastisol Formulation** | **Amount (parts by weight)** |
|---|---|
| | |

| **Plasticizer** | |
|---|---|
| DINP | 77 |
| | |

| **Stabilizer** | |
|---|---|
| Lankromark E2307 (ESBO) | 3 |
| Lankrostab LZB 600 | 2 |
| | |

| **PVC Grade** | |
|---|---|
| Lacovyl PB 1702 | 40 |
| Vestolit B7021 ultra | 60 |
| | |

| **Filler** | |
|---|---|
| Omyacarb 5 GU | 15 |
| | |
| **Total** | 197 |

Adhesive compositions were prepared by adding 2, 3, or 4 wt% of the bonding agent Vulcabond TP to the prepared plastisol at 30ºC. The compositions were properly mixed and de-aerated. Vulcabond TP is a 25 wt% isocyanurate solution mainly in a mixture of DBT (50 wt%) and TEHP (15 wt%).

A second bonding agent was prepared using a mixture of Vulcabond TP and TEHP in a 1:1 weight ratio. The dosing level of this bonding agent was twice the amount of the neat Vulcabond TP, since the isocyanate content was diluted to 12.5 wt% with the TEHP. Adhesive compositions were prepared by adding 4, 6, and 8 wt% of the second bonding agent to the prepared plastisol at 30ºC. The compositions were properly mixed and de-aerated.

The adhesive compositions were then coated onto 12 fiber threads/cm x 12 fiber threads/cm sheets of polyester fiber (DEWHURST, 550 dtex) at a layer thickness of 100 g/m² and placed in a Werner Mathis oven within 1 hour of adding the bonding agent. Additional coated samples were prepared with adhesive compositions that were allowed to sit for 24 hours at 30ºC.

The adhesive compositions on the coated fabric were fused in the oven at 190ºC for 1 minute.

The coated fabric samples were then subjected to a 90º peel test.

### Peel Test Procedure

Two test pieces of coated fabric size 3 x 20 cm were HF welded together with the coated sides facing each other, for an area of 2 x 15 cm.

Each loose end of the test sample was clamped in a material test machine and peeled under an angle of 90 degrees at a speed of 100 mm/min. The average peel force was measured on 8 cm of the welded area, disregarding the start and ending of the test.

The force was extrapolated to N/5 cm bond width.

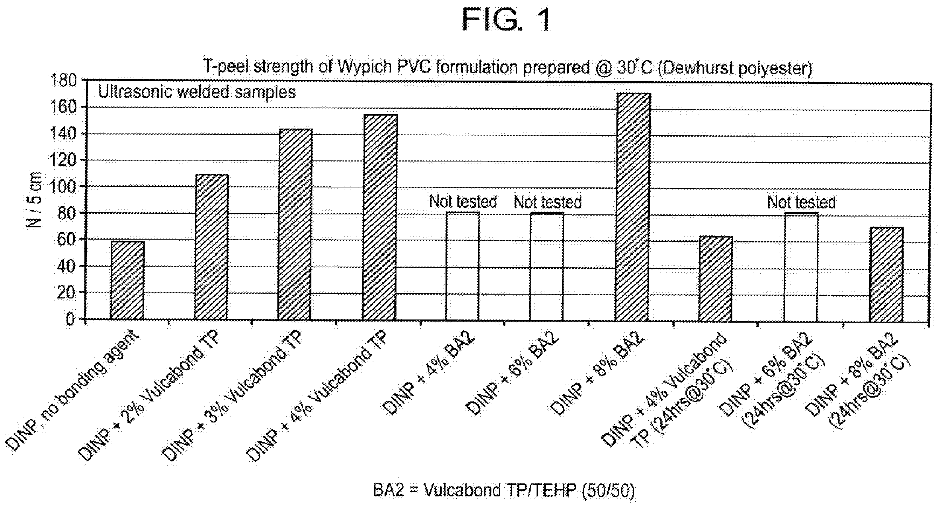

The peel test results are shown in Figure 1 along with a coated sample that was made with just the prepared plastisol and no bonding agent.

As seen from Figure 1, the results show a good increase in peel strength with increasing amount of bonding agent. The Vulcabond TP/TEHP 50/50 mixture results were comparable with the neat Vulcabond TP results. The results of adhesive compositions that were allowed to sit for 24 hours at 30ºC showed little increase in peel strength, which is expected due to the limited pot life of the adhesive composition.

### Example 4

Example 3 was repeated except that DINP in the prepared plastisol was replaced with DOTP.

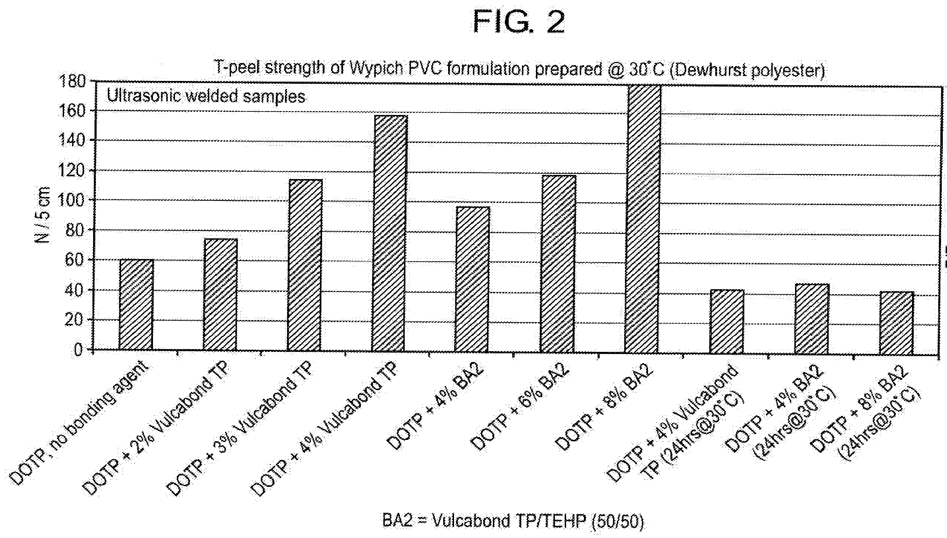

The 90º peel test results are shown in Figure 2 along with a coated sample that was made with just the prepared plastisol and no bonding agent.

As seen from Figure 2, the results for DOTP adhesive compositions showed good peel strength increase with increasing amount of bonding agent. The Vulcabond TP/TEHP 50/50 mixture results were in line or even better compared to the neat Vulcabond TP results. Also, there was no positive adhesion effect after storage of the adhesive composition for 24 hours at 30ºC, as expected due to the limited pot life.

Comparing the results of Figures 1 and 2, even though the DOTP-based plastisols seemed to have lower initial peel strength at 2 and 3 wt% loadings of neat Vulcabond TP compared to the corresponding DINP-based samples; at 8 wt% of the Vulcabond TP/TEHP 50/50 mixture, the initial peel strength surpassed that of the corresponding DINP-based plastisol.

### Example 5

Besides adhesion, it is also desirable to have a more or less constant viscosity during the pot life. Increasing viscosity could have a negative effect on the penetration of the adhesive composition into the fiber structure of the fabric and reduce the final peel strength. Therefore, the viscosity of the adhesive compositions from Examples 3 and 4 were monitored in the first 5 hours after addition of the bonding agent and after 24 hours.

A Brookfield viscosity measurement was conducted on the plastisols at 30ºC using spindle 5, at a rotation speed of 10 rpm.

The viscosity results for adhesive compositions from Examples 3 and 4 are shown in Tables 7 and 8, respectively, where TP refers to Vulcabond TP and the percentages of TP are by weight.

**Table 7**

| Viscosity Stability at 30ºC for DINP-Based Plastisol Samples | | | | | | | |
|---|---|---|---|---|---|---|---|
| **Adhesive Formulation** | **Viscosity after n hours at 30ºC** (mPas) | | | | | | |
| | n=0 | n=1 | n=2 | n=3 | n=4 | n=5 | n=24 |
| Plastisol Alone | 1280 | 1080 | 1180 | 1000 | 1040 | 1000 | 1080 |
| Plastisol + 2% TP | 1200 | 1080 | 1040 | 1080 | 1280 | 1680 | 125000 |
| Plastisol + 3% TP | 1240 | 1080 | 1160 | 1120 | 1320 | 1560 | 180000 |
| Plastisol + 4% TP | 1240 | 1040 | 1160 | 1160 | 1520 | 1920 | 180000 |
| Plastisol (duplo) | 1440 | 1080 | 1120 | 1080 | 1120 | 1080 | 1160 |
| Plastisol + 4% TP/TEHP | 920 | 800 | 840 | 880 | 960 | 1080 | 50000 |
| Plastisol + 6% TP/TEHP | 880 | 800 | 800 | 800 | 880 | 960 | 60000 |
| Plastisol + 8% TP/TEHP | 800 | 680 | 700 | 760 | 880 | 880 | 62000 |

**Table 8**

| Viscosity Stability at 30ºC for DOTP-Based Plastisol Samples | | | | | | | |
|---|---|---|---|---|---|---|---|
| **Adhesive Formulation** | **Viscosity after n hours at 30ºC** (mPas) | | | | | | |
| | n=0 | n=1 | n=2 | n=3 | n=4 | n=5 | n=24 |
| Plastisol Alone | 1160 | 1000 | 840 | 880 | 960 | 880 | 1000 |
| Plastisol + 2% TP | 1280 | 1560 | 1840 | 1840 | 2080 | 2040 | 4240 |
| Plastisol + 3% TP | 1600 | 2000 | 2040 | 2240 | 2200 | 2440 | 7000 |
| Plastisol + 4% TP | 1840 | 2440 | 2320 | 2400 | 2760 | 2800 | 17060 |
| Plastisol (duplo) | 1160 | 920 | 920 | 920 | 880 | 880 | 880 |
| Plastisol + 4% TP/TEHP | 960 | 960 | 960 | 1080 | 1160 | 1120 | 1600 |
| Plastisol + 6% TP/TEHP | 840 | 960 | 1080 | 1120 | 1120 | 1160 | 2840 |
| Plastisol + 8% TP/TEHP | 800 | 1120 | 1560 | 1840 | 1880 | 1960 | 18640 |

As seen from Tables 7 and 8, the results show a stable viscosity for both the DINP- and DOTP-based plastisols without bonding agent. The adhesive compositions with Vulcabond TP showed higher initial viscosity compared to the samples with TP/TEHP. Overall, the Vulcabond TP samples showed more viscosity increase within the first 5 hours than the samples with TP/TEHP. TEHP provided a lower initial viscosity and better viscosity stability.

### Example 6

A bonding agent was prepared by vacuum distilling Desmodur RC (an aromatic isocyanurate trimer product from Bayer with 35 wt% of isocyanate in ethyl acetate) to remove the majority of the ethyl acetate. The ethyl acetate was replaced with TEHP. This solution was further diluted with TEHP to obtain a bonding agent containing 12.5 wt% of isocyanate.

The invention has been described in detail with particular reference to preferred embodiments thereof, but it will be understood that variations and modifications can be effected within the spirit and scope of the invention.

## Claims

1. A coating composition comprising:
(a) a plastisol comprising polyvinyl chloride (PVC) powder dispersed in a plasticizer comprising dioctyl terephthalate or 1,2-cyclohexane dicarboxylic acid diisononyl ester; and
(b) a bonding composition comprising:
(i) isocyanurate; and
(ii) organophosphate,
wherein the weight ratio of organophosphate to isocyanurate ranges from 4:1 to 10:1.

2. The coating composition according to claim 1 wherein the organophosphate comprises alkyl or aryl groups having 7 to 10 carbon atoms.

3. The coating composition according to claim 1 or 2 wherein the organophosphate comprises tri-ethylhexyl phosphate, tricresyl phosphate, isodecyl diphenyl phosphate, 2-ethylhexyl diphenyl phosphate, or mixtures thereof.

4. The coating composition according to any one of claim 1 to 3 wherein the isocyanurate preferably comprises aromatic diisocyanate, such as 2,4-diisocyanatotoluene, 2,6 diisocyanatotoluene, or mixtures thereof.

5. The coating composition according to any one of claim 1 to 4, wherein the plastisol further comprises vinyl copolymers.

6. The coating composition according to any one of claim 1 to 5, which comprises 4 to 15% by weight of the bonding composition, based on the total weight of the coating composition.

7. The coating composition according to any one of claim 1 to 6, which comprises from 40 to 120 parts by weight of plasticizer per 100 parts of PVC particles.

8. The coating composition according to any one of claims 1 to 7, wherein the organophosphate comprises tri-ethylhexyl phosphate.

9. The coating composition according to any one of claims 1 to 8, which further comprises flame retardants, stabilizers, fillers, pigments, chlorinated hydrocarbons, secondary plasticizers, viscosity depressants, antioxidants, UV absorbers, biocides, or mixtures thereof.

10. A process for coating a fabric, comprising:
(a) combining a bonding composition comprising:
(i) isocyanurate; and
(ii) organophosphate,
wherein the weight ratio of organophosphate to isocyanurate ranges from 4:1 to 10:1, with a plastisol comprising polyvinyl chloride powder dispersed in a plasticizer comprising dioctyl terephthalate or 1,2-cyclohexane dicarboxylic acid diisononyl ester; and
(b) coating at least one side of a fabric with the mixture from step (a).

11. The process according to claim 10, wherein the plastisol further comprises vinyl copolymers.

12. The process according to claim 10 or 11, wherein the fabric comprises polyester or polyamide.

13. The process according to claim 10, 11 or 12, which further comprises (c) exposing the coated fabric to elevated temperature to fuse the coating.

14. An article of manufacture comprising a fabric coated with the coating composition according to claim 1.

## Patentansprüche

1. Beschichtungszusammensetzung umfassend:
(a) ein Plastisol umfassend Polyvinylchlorid (PVC)-Pulver dispergiert in einem Weichmacher umfassend Dioctylterephthalat oder 1,2-Cyclohexandicarbonsäurediisononylester; und
(b) eine Bindemittelzusammensetzung, umfassend:
(i) Isocyanurat; und
(ii) Organophosphat,
wobei das Gewichtsverhältnis von Organophosphat zu Isocyanurat im Bereich von 4:1 bis 10:1 liegt.

2. Beschichtungszusammensetzung nach Anspruch 1, wobei das Organophosphat Alkyl- oder Arylgruppen mit 7 bis 10 Kohlenstoffatomen umfasst.

3. Beschichtungszusammensetzung nach Anspruch 1 oder 2, wobei das Organophosphat Triethylhexylphosphat, Tricresylphosphat, Isodecyldiphenylphosphat, 2-Ethylhexyldiphenylphosphat oder Mischungen davon umfasst.

4. Beschichtungszusammensetzung nach einem der Ansprüche 1 bis 3, wobei das Isocyanurat vorzugsweise aromatisches Diisocyanat umfasst wie 2,4-Diisocyanatotoluol, 2,6-Diisocyanatotoluol oder Mischungen davon.

5. Beschichtungszusammensetzung nach einem der Ansprüche 1 bis 4, wobei das Plastisol ferner Vinylcopolymere umfasst.

6. Beschichtungszusammensetzung nach einem der Ansprüche 1 bis 5, die 4 bis 15 Gew.-% der Bindemittelzusammensetzung bezogen auf das Gesamtgewicht der Beschichtungszusammensetzung umfasst.

7. Beschichtungszusammensetzung nach einem der Ansprüche 1 bis 6, die 40 bis 120 Gewichtsteile Weichmacher pro 100 Teile PVC-Teilchen enthält.

8. Beschichtungszusammensetzung nach einem der Ansprüche 1 bis 7, wobei das Organophosphat Triethylhexylphosphat umfasst.

9. Beschichtungszusammensetzung nach einem der Ansprüche 1 bis 8, die ferner Flammschutzmittel, Stabilisatoren, Füllstoffe, Pigmente, Chlorkohlenwasserstoffe, sekundäre Weichmacher, Viskositätserniedriger, Antioxidationsmittel, UV-Absorber, Biocide oder Mischungen davon umfasst.

10. Verfahren zum Beschichten eines Gewebes, umfassend:
(a) Kombinieren einer Bindemittelzusammensetzung umfassend:
(i) Isocyanurat; und
(ii) Organophosphat,
wobei das Gewichtsverhältnis von Organophosphat zu Isocyanurat im Bereich von 4:1 bis 10:1 liegt mit einem Plastisol umfassend Polyvinylchloridpulver dispergiert in einem Weichmacher umfassend Dioctylterephthalat oder 1,2-Cyclohexandicarbonsäurediisononylester; und
(b) Beschichten mindestens einer Seite eines Gewebes mit der Mischung aus Schritt (a).

11. Verfahren nach Anspruch 10, wobei das Plastisol ferner Vinylcopolymere umfasst.

12. Verfahren nach Anspruch 10 oder 11, wobei das Gewebe Polyester oder Polyamid umfasst.

13. Verfahren nach Anspruch 10, 11 oder 12, bei dem ferner (c) das beschichtete Gewebe einer erhöhten Temperatur ausgesetzt wird, um die Beschichtung zu verschmelzen.

14. Herstellungsgegenstand umfassend ein Gewebe, das mit der Beschichtungszusammensetzung gemäß Anspruch 1 beschichtet ist.

## Revendications

1. Composition de revêtement comprenant :
(a) un plastisol comprenant une poudre de poly(chlorure de vinyle) (PVC) dispersée dans un plastifiant comprenant du téréphtalate de dioctyle ou de l'ester diisononylique d'acide 1,2-cyclohexanedicarboxylique ; et
(b) une composition liante comprenant :
(i) un isocyanurate ; et
(ii) un phosphate organique,
dans laquelle le rapport en poids du phosphate organique à l'isocyanurate est situé dans la plage allant de 4/1 à 10/1.

2. Composition de revêtement selon la revendication 1, dans laquelle le phosphate organique comprend des groupes alkyle ou aryle ayant 7 à 10 atomes de carbone.

3. Composition de revêtement selon la revendication 1 ou 2, dans laquelle le phosphate organique comprend du phosphate de triéthylhexyle, du phosphate de tricrésyle, du phosphate d'isodécyldiphényle, du phosphate de 2-éthylhexyldiphényle ou des mélanges de ceux-ci.

4. Composition de revêtement selon l'une quelconque des revendications 1 à 3, dans laquelle l'isocyanurate comprend de préférence un diisocyanate aromatique, tel que le 2,4-diisocyanatotoluène, le 2,6-diisocyanatotoluène, ou des mélanges de ceux-ci.

5. Composition de revêtement selon l'une quelconque des revendications 1 à 4, dans laquelle le plastisol comprend en outre des copolymères de vinyle.

6. Composition de revêtement selon l'une quelconque des revendications 1 à 5, qui comprend 4 à 15 % en poids de la composition liante, par rapport au poids total de la composition de revêtement.

7. Composition de revêtement selon l'une quelconque des revendications 1 à 6, qui comprend de 40 à 120 parties en poids de plastifiant pour 100 parties de particules de PVC.

8. Composition de revêtement selon l'une quelconque des revendications 1 à 7, dans laquelle le phosphate organique comprend du phosphate de triéthylhexyle.

9. Composition de revêtement selon l'une quelconque des revendications 1 à 8, qui comprend en outre des agents ignifugeants, des stabilisants, des charges, des pigments, des hydrocarbures chlorés, des plastifiants secondaires, des agents abaissant la viscosité, des antioxydants, des absorbeurs UV, des biocides, ou des mélanges de ceux-ci.

10. Procédé pour enduire une étoffe comprenant :
(a) la combinaison d'une composition liante comprenant :
(i) un isocyanurate ; et
(ii) un phosphate organique,
dans laquelle le rapport en poids du phosphate organique à l'isocyanurate est situé dans la plage allant de 4/1 à 10/1, avec un plastisol comprenant une poudre de poly(chlorure de vinyle) dispersée
dans un plastifiant comprenant du téréphtalate de dioctyle ou de l'ester diisononylique d'acide 1,2-cyclohexanedicarboxylique ; et
(b) l'enduction d'au moins un côté de l'étoffe avec le mélange obtenu dans l'étape (a).

11. Procédé selon la revendication 10, dans lequel le plastisol comprend en outre des copolymères de vinyle.

12. Procédé selon la revendication 10 ou 11, dans lequel l'étoffe comprend un polyester ou un polyamide.

13. Procédé selon la revendication 10, 11 ou 12, qui comprend en outre
(c) l'exposition de l'étoffe enduite à une température élevée pour fondre le revêtement.

14. Article manufacturé comprenant une étoffe enduite de la composition de revêtement selon la revendication 1.
